# EUROPEAN PATENT APPLICATION

(11) **EP 4 460 132 A1**
(43) Date of publication of application: **06.11.2024**
(21) Application number: 23758944.5
(22) Date of filing: 19.01.2023
(51) Int. Cl.: H04W 72/04

(54) **TASK EXECUTION METHOD AND RELATED DEVICE**

(30) Priority: 24.02.2022 CN 202210177066
(71) Applicant: Huawei Technologies Co., Ltd., Shenzhen, Guangdong 518129 (CN)
(72) Inventor: WANG, Fei, Shenzhen, Guangdong 518129 (CN); PENG, Chenghui, Shenzhen, Guangdong 518129 (CN); WANG, Jun, Shenzhen, Guangdong 518129 (CN); LIU, Zhe, Shenzhen, Guangdong 518129 (CN); WU, Jianjun, Shenzhen, Guangdong 518129 (CN)
(74) Representative: MERH-IP Matias Erny Reichl Hoffmann Patentanwälte PartG mbB
(86) International application number: PCT/CN2023/073241
(87) International publication number: WO 2023/160319

(57) **Abstract**

This application provides a task execution method and a related apparatus. The method includes: A first node receives a first message from a second node, where the first message includes first configuration information of a first task, so that the first node can execute the first task based on the first configuration information. In this case, a complete task execution environment is provided for the first task in a wireless network by using the first configuration information, so that the first task can be executed as required.

## Description

This application claims priority to Chinese Patent Application No. 202210177066.2, filed with the China National Intellectual Property Administration on February 24, 2022 and entitled "TASK EXECUTION METHOD AND RELATED APPARATUS", which is incorporated herein by reference in its entirety.

### TECHNICAL FIELD

This application relates to the field of communication technologies, and in particular, to a task execution method and a related apparatus.

### BACKGROUND

With continuous development of computer technologies, artificial intelligence (Artificial Intelligence, AI) models have been widely used in fields related to video images, speech recognition, natural language processing, and the like. Currently, terminal devices, base stations, or the like usually need to report a large amount of data to cloud servers, and the cloud servers complete training, inference, and the like of the AI models based on the data. However, for training, inference, and the like of the AI models that are implemented by the cloud servers, the terminal devices, the base stations, or the like need to transmit the data, and problems such as data leakage, an excessively high transmission delay, and high energy consumption are likely to occur. Therefore, to avoid the foregoing problems, cloud computing can be offloaded to wireless networks. However, there is currently no corresponding solution for how to offload cloud computing to the wireless networks and provide a complete computing environment in the wireless networks.

### SUMMARY

This application provides a task execution method and a related apparatus, to provide a complete task execution environment in a wireless network, so that a task can be executed as required.

According to a first aspect, a task execution method is provided. The method includes: A first node receives a first message from a second node, where the first message includes first configuration information of a first task; and the first node executes the first task based on the first configuration information. It can be learned that the first node receives the first message from the second node, where the first message includes the first configuration information of the first task, so that the first node can execute the first task based on the first configuration information. In this case, a complete task execution environment is provided for the first task in a wireless network by using the first configuration information, so that the first task can be executed as required.

Optionally, with reference to the first aspect, the first message further includes identification information of the first task, and the first configuration information includes at least one of the following: identification information of input data of the first task, identification information of output data of the first task, and model identification information corresponding to the first task. It can be learned that the input and output of the first task and a used model are configured by using the first configuration information, to provide the complete task execution environment for the first task, so that the first task can be executed on the first node as required.

Optionally, with reference to the first aspect, before the first node receives the first message from the second node, the method further includes: The first node receives a second message from the second node, where the second message indicates the first node to establish a task execution functional entity for the first task; and the first node sends attribute information of the task execution functional entity to the second node, where the attribute information of the task execution functional entity includes at least one of the following: identification information of the task execution functional entity, and address information of the task execution functional entity. It can be learned that, after receiving the second message sent by the second node, the first node may establish the task execution functional entity for the first task, and send the attribute information of the task execution functional entity, to prepare for subsequent normal execution of the first task.

Optionally, with reference to the first aspect, the method further includes: The first node sends a resource request message to the second node, where the resource request message includes a computing power resource required by the first task, and the resource request message is used to request the second node to allocate a computing power resource to the first task; and the first node receives a resource scheduling indication message from the second node, where the resource scheduling indication message indicates the computing power resource that is available for the first task. That the first node executes the first task based on the first configuration information includes: The first node executes the first task based on the first configuration information and the computing power resource that is available for the first task. It can be learned that, the first node sends the resource request message and receives the resource scheduling indication message, so that the first node may flexibly adjust, based on a task requirement of the first node, a resource required for running the task. This improves task execution efficiency and ensures smooth execution of the task.

According to a second aspect, a task execution method is provided. The method includes: A second node receives a first message from a third node, where the first message includes first configuration information of a first task; and the second node sends the first message to the first node. It can be learned that the second node may send the first message from the third node to the first node, where the first message includes the first configuration information of the first task, so that the first node can execute the first task based on the first configuration information. In this case, a complete task execution environment is provided for the first task in a wireless network by using the first configuration information, so that the first task can be executed as required.

Optionally, with reference to the second aspect, the first message further includes identification information of the first task, and the first configuration information includes at least one of the following: identification information of input data of the first task, identification information of output data of the first task, and model identification information corresponding to the first task. It can be learned that the input and output of the first task and a used model are configured by using the first configuration information, to provide the complete task execution environment for the first task, so that the first task can be executed on the first node as required.

Optionally, with reference to the second aspect, the method further includes: The second node receives a third message from the third node, where the third message includes second configuration information of the first task; and the second node establishes context information of the first task, where the context information of the first task includes the second configuration information. It can be learned that, the second node may manage and control the task running on the subordinate first node by establishing a task-related context, to ensure smooth execution of the task.

Optionally, with reference to the second aspect, the second configuration information includes at least one of the following: a relationship of service collaboration between the first task and another subtask included in the second task, and a parameter of collaboration between the first task and the another subtask included in the second task. The second task includes at least one subtask, and the at least one subtask includes the first task.

Optionally, with reference to the second aspect, the second configuration information further includes a quality of service QoS parameter of the first task.

Optionally, with reference to the second aspect, the method further includes: The second node receives a fourth message from the third node, where the fourth message indicates to establish a task execution functional entity for the first task on the first node that is managed by the second node; the second node sends a second message to the first node, where the second message indicates the first node to establish the task execution functional entity for the first task; the second node receives attribute information of the task execution functional entity from the first node; and the second node sends the attribute information of the task execution functional entity to the third node, where the attribute information of the task execution functional entity includes at least one of the following: identification information of the task execution functional entity, and address information of the task execution functional entity. It can be learned that the third node may learn of the attribute information of the task execution functional entity from the second node, so that the third node delivers configuration information based on the attribute information of the task execution functional entity. Further, the task can be normally executed.

Optionally, with reference to the second aspect, the method further includes: The second node sends the context information of the first task to a fourth node, where the fourth node is a node accessed after the first node performs cell handover. It can be learned that in a scenario in which the first node performs cell handover, the fourth node may obtain the context information of the first task, to manage the first task based on the context information of the first task.

Optionally, with reference to the second aspect, the context information of the first task further includes at least one of the following: the identification information of the first task, the identification information of the task execution functional entity in the first node, and the address information of the task execution functional entity in the first node.

Optionally, with reference to the second aspect, the method further includes: The second node receives a resource request message from the first node, where the resource request message includes a computing power resource required by the first task, and the resource request message is used to request the second node to allocate a computing power resource to the first task; the second node determines based on a priority of the first task and the computing power resource required by the first task, the computing power resource that is available for the first task, where the priority of the first task is determined based on a QoS parameter of the first task; and the second node sends a resource scheduling indication message to the first node, where the resource scheduling indication message indicates the computing power resource that is available for the first task. It can be learned that the second node may schedule the resource for the first task in real time based on the resource request message of the first node, so that after receiving the resource scheduling indication message, the first node may flexibly adjust, based on a task requirement of the first node, a resource required for running the task. This improves task execution efficiency and ensures smooth execution of the task.

According to a third aspect, a task execution method is provided. The method includes: A third node determines a second task, where the second task includes at least one subtask, and the at least one subtask includes a first task; the third node determines, for the first task, a first node configured to execute the first task, where the first node is managed by a second node; and the third node sends a first message to the second node, where the first message includes first configuration information of the first task. It can be learned that the third node may determine the second task, determine, for the first task in the at least one subtask included in the second task, the first node configured to execute the first task, further learn of the second node that manages the first node, and send the first message to the second node, to prepare for a scenario in which the first node normally executes the first task based on the first configuration information without needing transfer data required by the task.

Optionally, with reference to the third aspect, the first message further includes identification information of the first task, and the first configuration information includes at least one of the following: identification information of input data of the first task, identification information of output data of the first task, and model identification information corresponding to the first task. It can be learned that the input and output of the first task and a used model are configured by using the first configuration information, to provide the complete task execution environment for the first task, so that the first task can be executed on the first node as required.

Optionally, with reference to the third aspect, the method further includes: The third node sends a fourth message to the second node, where the fourth message indicates to establish a task execution functional entity for the first task on the first node that is managed by the second node; and the third node receives attribute information of the task execution functional entity from the second node. That the third node sends a first message to the second node includes: The third node sends the first message to the second node based on the attribute information of the task execution functional entity, where the attribute information of the task execution functional entity includes at least one of the following: identification information of the task execution functional entity, and address information of the task execution functional entity. It can be learned that the third node may learn of the attribute information of the task execution functional entity from the second node, so that the third node delivers configuration information based on the attribute information of the task execution functional entity. Further, the task can be normally executed.

Optionally, with reference to the third aspect, the method further includes: The third node sends a third message to the second node, where the third message includes second configuration information of the first task.

Optionally, with reference to the third aspect, the second configuration information includes at least one of the following: a relationship of service collaboration between the first task and another subtask included in the second task, and a parameter of collaboration between the first task and the another subtask included in the second task.

Optionally, with reference to the third aspect, the second configuration information further includes a quality of service QoS parameter of the first task.

For beneficial effects of the following fourth aspect, refer to beneficial effects of the first aspect. For beneficial effects of a fifth aspect, refer to beneficial effects of the second aspect. For beneficial effects of a sixth aspect, refer to beneficial effects of the third aspect. Details are not described herein again.

According to a fourth aspect, a communication apparatus is provided. The communication apparatus is a first node, and the first node includes a transceiver module and a processing module. The transceiver module is configured to receive a first message from a second node, where the first message includes first configuration information of a first task. The processing module is configured to execute the first task based on the first configuration information.

Optionally, with reference to the fourth aspect, the first message further includes identification information of the first task, and the first configuration information includes at least one of the following: identification information of input data of the first task, identification information of output data of the first task, and model identification information corresponding to the first task.

Optionally, with reference to the fourth aspect, the transceiver module is further configured to: receive a second message from the second node, where the second message indicates the first node to establish a task execution functional entity for the first task; and send attribute information of the task execution functional entity to the second node, where the attribute information of the task execution functional entity includes at least one of the following: identification information of the task execution functional entity, and address information of the task execution functional entity.

Optionally, with reference to the fourth aspect, the transceiver module is further configured to: send a resource request message to the second node, where the resource request message includes a computing power resource required by the first task, and the resource request message is used to request the second node to allocate a computing power resource to the first task; and receive a resource scheduling indication message from the second node, where the resource scheduling indication message indicates the computing power resource that is available for the first task. When executing the first task based on the first configuration information, the processing module is configured to execute the first task based on the first configuration information and the computing power resource that is available for the first task.

According to a fifth aspect, a communication apparatus is provided. The communication apparatus is a second node, and the first node includes a transceiver module. The transceiver module is configured to receive a first message from a third node, where the first message includes first configuration information of a first task. The transceiver module is configured to send the first message to a first node.

Optionally, with reference to the fifth aspect, the first message further includes identification information of the first task, and the first configuration information includes at least one of the following: identification information of input data of the first task, identification information of output data of the first task, and model identification information corresponding to the first task.

Optionally, with reference to the fifth aspect, the communication apparatus further includes a processing module. The transceiver module is further configured to receive a third message from the third node, where the third message includes second configuration information of the first task. The processing module is configured to establish context information of the first task, where the context information of the first task includes the second configuration information.

Optionally, with reference to the fifth aspect, the second configuration information includes at least one of the following: a relationship of service collaboration between the first task and another subtask included in the second task, and a parameter of collaboration between the first task and the another subtask included in the second task. The second task includes at least one subtask, and the at least one subtask includes the first task.

Optionally, with reference to the fifth aspect, the transceiver module is further configured to: receive a fourth message from the third node, where the fourth message indicates to establish a task execution functional entity for the first task on the first node that is managed by the second node; send a second message to the first node, where the second message indicates the first node to establish the task execution functional entity for the first task; receive attribute information of the task execution functional entity from the first node; and send the attribute information of the task execution functional entity to the third node, where the attribute information of the task execution functional entity includes at least one of the following: identification information of the task execution functional entity, and address information of the task execution functional entity.

Optionally, with reference to the fifth aspect, the transceiver module is further configured to send the context information of the first task to a fourth node, where the fourth node is a node accessed after the first node performs cell handover.

Optionally, with reference to the fifth aspect, the context information of the first task further includes at least one of the following: the identification information of the first task, the identification information of the task execution functional entity in the first node, and the address information of the task execution functional entity in the first node.

Optionally, with reference to the fifth aspect, the communication apparatus further includes a processing module. The transceiver module is further configured to receive a resource request message from the first node, where the resource request message includes a computing power resource required by the first task, and the resource request message is used to request the second node to allocate a computing power resource to the first task. The processing module is configured to determine based on a priority of the first task and the computing power resource required by the first task, the computing power resource that is available for the first task, where the priority of the first task is determined based on a QoS parameter of the first task. The transceiver module is further configured to send a resource scheduling indication message to the first node, where the resource scheduling indication message indicates the computing power resource that is available for the first task.

According to a sixth aspect, a communication apparatus is provided. The communication apparatus is a third node, and the first node includes a transceiver module and a processing module. The processing module is configured to determine a second task, where the second task includes at least one subtask, and the at least one subtask includes a first task. The processing module is configured to determine, for the first task, a first node configured to execute the first task, where the first node is managed by a second node. The transceiver module is configured to send a first message to the second node, where the first message includes first configuration information of the first task.

Optionally, with reference to the sixth aspect, the first message further includes identification information of the first task, and the first configuration information includes at least one of the following: identification information of input data of the first task, identification information of output data of the first task, and model identification information corresponding to the first task.

Optionally, with reference to the sixth aspect, the transceiver module is further configured to send a fourth message to the second node, where the fourth message indicates to establish a task execution functional entity for the first task on the first node that is managed by the second node; and receive attribute information of the task execution functional entity from the second node. When sending the first message to the second node, the transceiver module is configured to send the first message to the second node based on the attribute information of the task execution functional entity, where the attribute information of the task execution functional entity includes at least one of the following: identification information of the task execution functional entity, and address information of the task execution functional entity.

Optionally, with reference to the sixth aspect, the transceiver module is further configured to send a third message to the second node, where the third message includes second configuration information of the first task.

Optionally, with reference to the sixth aspect, the second configuration information includes at least one of the following: a relationship of service collaboration between the first task and another subtask included in the second task, and a parameter of collaboration between the first task and the another subtask included in the second task.

Optionally, with reference to the fifth aspect or the sixth aspect, the second configuration information further includes a quality of service QoS parameter of the first task.

According to a seventh aspect, a chip is provided. The chip includes at least one logic circuit and an input/output interface. The logic circuit is configured to read and execute stored instructions. When the instructions are run, the chip is enabled to perform the method according to any one of the first aspect, the second aspect, or the third aspect.

According to an eighth aspect, a computer-readable storage medium is provided. The computer-readable storage medium stores a computer program. The computer program includes program instructions, and when the program instructions are executed by a computer, the computer is enabled to perform the method according to any one of the first aspect, the second aspect, or the third aspect.

According to a ninth aspect, a communication apparatus is provided, including a processor, a memory, an input interface, and an output interface. The input interface is configured to receive information from another communication apparatus other than the communication apparatus. The output interface is configured to output information to the another communication apparatus other than the communication apparatus. When invoking and executing a computer program stored in the memory, the processor is configured to perform the method according to any one of the first aspect, the second aspect, or the third aspect.

In a possible design, the communication apparatus may be a chip that performs any method according to the first aspect, the second aspect, or the third aspect or a device that includes the chip.

According to a tenth aspect, a communication system is provided. The communication system includes at least one of the following: a first node, a second node, and a third node.

### BRIEF DESCRIPTION OF DRAWINGS

The following briefly describes accompanying drawings used in describing embodiments.
FIG. 1 is a basic architecture of a communication system according to an embodiment of this application;
FIG. 2 is a diagram of a hardware structure applicable to a communication apparatus according to an embodiment of this application;
FIG. 3 is a diagram of a task management and control architecture according to an embodiment of this application;
FIG. 4 is a schematic flowchart of a task execution method according to an embodiment of this application;
FIG. 5 is a diagram of a structure of a communication apparatus according to an embodiment of this application;
FIG. 6 is a simplified diagram of a structure of a terminal device according to an embodiment of this application; and
FIG. 7 is a simplified diagram of a structure of an access network device according to an embodiment of this application.

### DESCRIPTION OF EMBODIMENTS

The following describes technical solutions in embodiments of this application with reference to accompanying drawings in embodiments of this application. The terms "system" and "network" may be used interchangeably in embodiments of this application. "/" represents an "or" relationship between associated objects unless otherwise specified. For example, A/B may represent A or B. The term "and/or" in this application is merely an association relationship for describing associated objects, and represents that three relationships may exist. For example, A and/or B may represent the following three cases: Only A exists, both A and B exist, and only B exists, where A and B each may be singular or plural. In addition, in the descriptions of this application, "a plurality of" means two or more unless otherwise specified. "At least one of the following items (pieces)" or a similar expression thereof means any combination of these items, including any combination of singular items (pieces) or plural items (pieces). For example, at least one of a, b, or c may represent a, b, c, a and b, a and c, b and c, or a, b, and c, where a, b, and c may be singular or plural. In addition, to clearly describe the technical solutions in embodiments of this application, the terms such as "first" and "second" are used in embodiment of this application to distinguish between same items or similar items that provide basically same network elements or purposes. A person skilled in the art may understand that the terms such as "first" and "second" do not limit a quantity or an execution sequence, and the words such as "first" and "second" do not indicate a definite difference.

Reference to "an embodiment", "some embodiments", or the like described in embodiments of this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner.

The objectives, technical solutions, and beneficial effects of this application are further described in detail in the following specific implementations. It should be understood that the following descriptions are merely specific implementations of this application, but are not intended to limit the protection scope of this application. Any modification, equivalent replacement, or improvement made based on technical solutions of this application shall fall within the protection scope of this application.

In embodiments of this application, if there are no special statements and logic conflicts, terms and/or descriptions between different embodiments are consistent and may be mutually referenced, and technical features in different embodiments may be combined based on an internal logical relationship thereof, to form a new embodiment.

It should be understood that the technical solutions in embodiments of this application may be applied to a long term evolution (long term evolution, LTE) architecture, a 5th-generation mobile communication technology (5th generation mobile network, 5G) system, a wireless local area network (wireless local area network, WLAN) system, an internet of vehicles system, and the like. The technical solutions in embodiments of this application may be further applied to another future communication system, for example, a 6G communication system. In the future communication system, a same function may be maintained, but a name may be changed. Certainly, the technical solutions in embodiments of this application may be further applicable to a low frequency scenario (sub-6 GHz), a high frequency scenario (above 6 GHz), terahertz, optical communication, and the like.

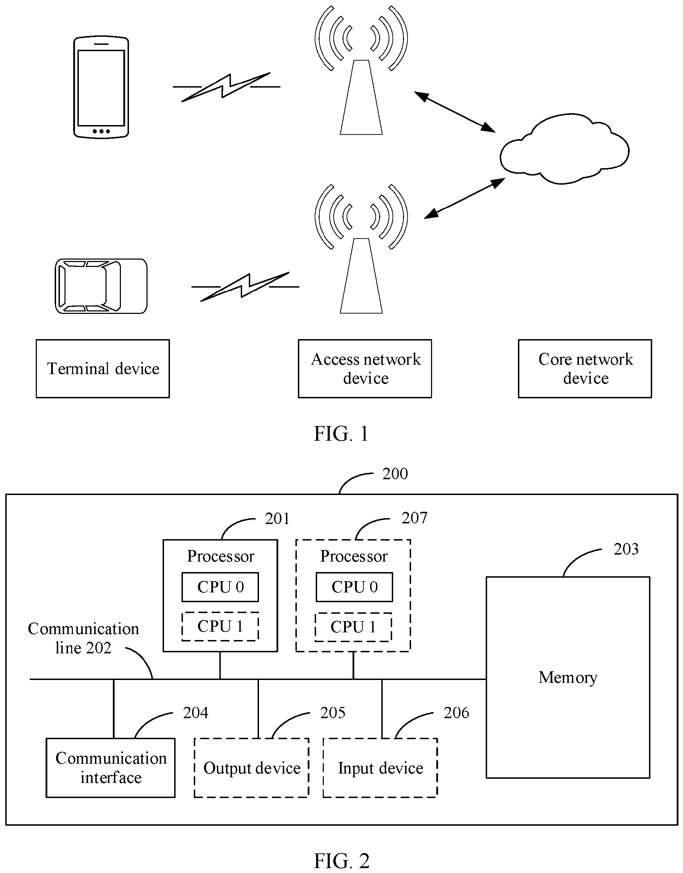

The following describes a basic architecture of a communication system according to an embodiment of this application. FIG. 1 is a basic architecture of a communication system according to an embodiment of this application. As shown in FIG. 1, the communication system may include a core network device, one or more access network devices, and one or more terminal devices that communicate with each access network device. FIG. 1 is merely a diagram, and does not constitute a limitation on an applicable scenario of the technical solutions provided in this application.

The core network device may be a core network device in LTE, a core network device in 5G, or a core network device in another communication system. This is not limited herein. Using a 5G communication system as an example, the core network device may be, for example, an application function (application function, AF) network element, or a session management function (session management function, SMF) network element. The AF network element transfers a requirement of an application side for a network side, for example, a quality of service (quality of service, QoS) requirement or a user status event subscription. The AF may be a third-party functional entity, or may be an operator-deployed application service, for example, an IP multimedia subsystem (IP Multimedia Subsystem, IMS) voice call service. The SMF network element performs functions, such as session management, execution of a control policy delivered by a policy control function (policy control function, PCF), selection of a user plane function (user plane function, UPF) network element, and internet protocol (internet protocol, IP) address allocation of a terminal device.

The access network device is a network-side entity that is configured to send a signal, receive a signal, or send and receive a signal. The access network device may be an apparatus that is deployed in a radio access network (radio access network, RAN) and that provides a wireless communication function for the terminal device, for example, may be a transmission reception point (transmission reception point, TRP), a base station, or control nodes in various forms, for example, may be a network controller, a radio controller, or a radio controller in a cloud radio access network (cloud radio access network, CRAN) scenario. Specifically, the access network device may be a macro base station, a micro base station (also referred to as a small station), a relay station, an access point (access point, AP), a radio network controller (radio network controller, RNC), a NodeB (nodeB, NB), a base station controller (base station controller, BSC), a base transceiver station (base transceiver station, BTS), a home base station (for example, a home evolved nodeB, or a home nodeB, HNB), a baseband unit (baseband unit, BBU), a transmission reception point (transmitting and receiving point, TRP), a transmission point (transmitting point, TP), a mobile switching center, a satellite, an unmanned aerial vehicle, and the like in various forms; or may be an antenna panel of a base station. The control node may be connected to a plurality of base stations, and configure resources for a plurality of terminals covered by the plurality of base stations. In systems using different radio access technologies, names of devices having functions of the base station may vary. For example, the access network device may be a gNB in 5G, a network side device in a network after 5G, an access network device in a future evolved PLMN network, or a device that provides a base station function in device-to-device (Device-to-Device, D2D) communication, machine-to-machine (Machine-to-Machine, M2M) communication, or internet of vehicles communication. A specific name of the access network device is not limited in this application. In addition, the access network device may alternatively include a central unit (central unit, CU) and a distributed unit (distributed unit, DU) that are integrated into the gNB.

The terminal device is a user-side entity that is configured to receive a signal, send a signal, or receive and send a signal. The terminal device is configured to provide one or more of the following for a user: a voice service and a data connectivity service. The terminal device may be a device that includes a wireless transceiver function and that can cooperate with the access network device to provide a communication service for the user. Specifically, the terminal device may be user equipment (user equipment, UE), an access terminal, a subscriber unit, a subscriber station, a mobile station, a remote station, a remote terminal, a mobile device, a terminal, a wireless communication device, a user agent, or a user apparatus. The terminal device may alternatively be an uncrewed aerial vehicle, an internet of things (internet of things, IoT) device, a station (station, ST) in a WLAN, a cellular phone (cellular phone), a smartphone (smartphone), a cordless phone, a wireless data card, a tablet computer, a session initiation protocol (session initiation protocol, SIP) phone, a wireless local loop (wireless local loop, WLL) station, a personal digital assistant (personal digital assistant, PDA) device, a laptop computer (laptop computer), a machine type communication (machine type communication, MTC) terminal, a handheld device with a wireless communication function, a computing device or another processing device connected to a wireless modem, a vehicle-mounted device, a wearable device (also referred to as a wearable intelligent device), a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. The terminal device may alternatively be a device-to-device (device-to-device, D2D) device, for example, an electricity meter or a water meter. Alternatively, the terminal device may be a terminal in a 5G system, or a terminal in a next-generation communication system. This is not limited in embodiments of this application.

In this application, a first node may be a core network device, an access network device, a terminal device, or a multi-access edge computing (multi-access edge computing, MEC) entity, a second node may be a core network device or an access network device, a third node may be a core network device or an access network device, and a fourth node may be a core network device or an access network device. The fourth node is a node accessed after the first node performs cell handover. The first node and the fourth node may be a same node or different nodes. This is not limited herein.

MEC is an open platform located at a network edge near people, things, or data sources. The MEC integrates core capabilities of a network, computing, storage, and an application, and can provide edge intelligence services nearby to meet key requirements of industry digitalization in terms of agile connection, real-time services, data optimization, and application intelligence. The MEC entity may be an MEC server. The MEC server is a server on which an MEC platform is deployed and managed by the MEC platform. In addition, the MEC server may be connected to a cloud data center and another network, for example, an enterprise network. In this case, the MEC server provides a service and a cloud computing function for a terminal device nearby by using a radio access network.

Optionally, the core network device, the access network device, the terminal device, and the like in FIG. 1 may be implemented by one device, or may be jointly implemented by a plurality of devices, or may be one functional module in one device. This is not specifically limited in embodiments of this application. It may be understood that the foregoing function may be a network element in a hardware device, a software function running on dedicated hardware, or a virtualization function instantiated on a platform (for example, a cloud platform).

For example, each device in FIG. 1 may be implemented by a communication apparatus 200 in FIG. 2.

FIG. 2 is a diagram of a hardware structure applicable to a communication apparatus according to an embodiment of this application. The communication apparatus 200 includes at least one processor 201, a communication line 202, a memory 203, and at least one communication interface 204.

The processor 201 may be a general-purpose central processing unit (central processing unit, CPU), a microprocessor, an application-specific integrated circuit (application-specific integrated circuit, ASIC), or one or more integrated circuits that are configured to control execution of a program in the solutions in this application.

The communication line 202 may include a path on which information is transferred between the foregoing components.

The communication interface 204 is an apparatus (like an antenna) like any transceiver, and is configured to communicate with another device or a communication network, like the Ethernet, a RAN, or a wireless local area network (wireless local area network, WLAN).

The memory 203 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital versatile disc, a Blu-ray disc, or the like), magnetic disk storage medium or another magnetic storage device, or any other medium that can be used to carry or store expected program code in a form of instructions or a data structure and that is accessible to a computer, but is not limited thereto. The memory may exist independently, and is connected to the processor through the communication line 202. The memory may alternatively be integrated with the processor. The memory provided in embodiments of this application may be usually non-volatile. The memory 203 is configured to store computer-executable instructions for executing the solutions in this application, and the processor 201 controls the execution. The processor 201 is configured to execute the computer-executable instructions stored in the memory 203, to implement a method provided in the following embodiments of this application.

Optionally, the computer-executable instructions in embodiments of this application may also be referred to as application program code. This is not specifically limited in embodiments of this application.

In a possible implementation, the processor 201 may include one or more CPUs, for example, a CPU 0 and a CPU 1 in FIG. 2.

In a possible implementation, the communication apparatus 200 may include a plurality of processors, for example, the processor 201 and a processor 207 in FIG. 2. Each of the processors may be a single-core (single-CPU) processor, or may be a multi-core (multi-CPU) processor. The processor herein may be one or more devices, circuits, and/or processing cores configured to process data (for example, computer program instructions).

In a possible implementation, the communication apparatus 200 may further include an output device 205 and an input device 206. The output device 205 communicates with the processor 201, and may display information in a plurality of manners. For example, the output device 205 may be a liquid crystal display (liquid crystal display, LCD), a light emitting diode (light emitting diode, LED) display device, a cathode ray tube (cathode ray tube, CRT) display device, or a projector (projector). The input device 206 communicates with the processor 201, and may receive an input of a user in a plurality of manners. For example, the input device 206 may be a mouse, a keyboard, a touchscreen device, a sensor device, or the like.

The foregoing communication apparatus 200 may be a general-purpose device or a special-purpose device. During specific implementation, the communication apparatus 200 may be a portable computer, a network server, a palmtop computer (personal digital assistant, PDA), a mobile phone, a tablet computer, a wireless terminal device, an embedded device, or a device having a structure similar to that in FIG. 2. A type of the communication apparatus 200 is not limited in embodiments of this application.

After the communication apparatus is powered on, the processor 201 may read a software program in the memory 203, interpret and execute instructions of the software program, and process data of the software program. When data needs to be sent wirelessly, the processor 201 performs baseband processing on the to-be-sent data, and then outputs a baseband signal to a radio frequency circuit. The radio frequency circuit performs radio frequency processing on the baseband signal, and then sends a radio frequency signal in a form of an electromagnetic wave by using the antenna. When data is sent to the communication apparatus, the radio frequency circuit receives the radio frequency signal through the antenna, converts the radio frequency signal into a baseband signal, and outputs the baseband signal to the processor 201. The processor 201 converts the baseband signal into data, and processes the data.

In another implementation, the radio frequency circuit and the antenna may be disposed independently of the processor for baseband processing. For example, in a distributed scenario, the radio frequency circuit and the antenna may be disposed remotely independent of the communication apparatus.

To better understand the technical solutions provided in embodiments of this application, the following explains and describes some terms (or communication terms) in this application. It may be understood that when the following terms are used in other parts of this application, no explanation or description is provided subsequently.

### 1. Task (task)

In a possible implementation, for example, one task may include at least one of the following: an artificial intelligence (artificial intelligence, AI) training task, an AI inference task, an AI perception task, and the like. This is not limited herein. In another possible implementation, an example of one task may be a subtask of the foregoing task.

The AI training task is a task of training a model by using a training dataset, and the model is an AI model. The AI model is a mathematical algorithm model that resolves an actual problem by using a machine learning idea. The AI model includes a large quantity of parameters and calculation formulas (or calculation rules). The parameters in the AI model are values that can be obtained by training the AI model by using the training dataset.

The AI inference task is a task of performing inference on data by using a trained AI model, and obtaining an inference result.

The AI perception task is a task of perceiving a user behavior, a behavior intention, and the like by using AI technologies.

The following uses an example in which the AI model is a neural network (artificial neural network, ANN) model, to describe a subtask of the AI training task. One neural network model may include a plurality of neural network layers with different functions. The subtask of the AI training task may be a task of training at least one neural network layer. Similarly, a subtask of the AI inference task may be a task of performing inference by using at least one trained neural network layer, and a subtask of the AI perception task may be a task of performing perception by using at least one trained neural network layer.

### 2. Task management and control architecture

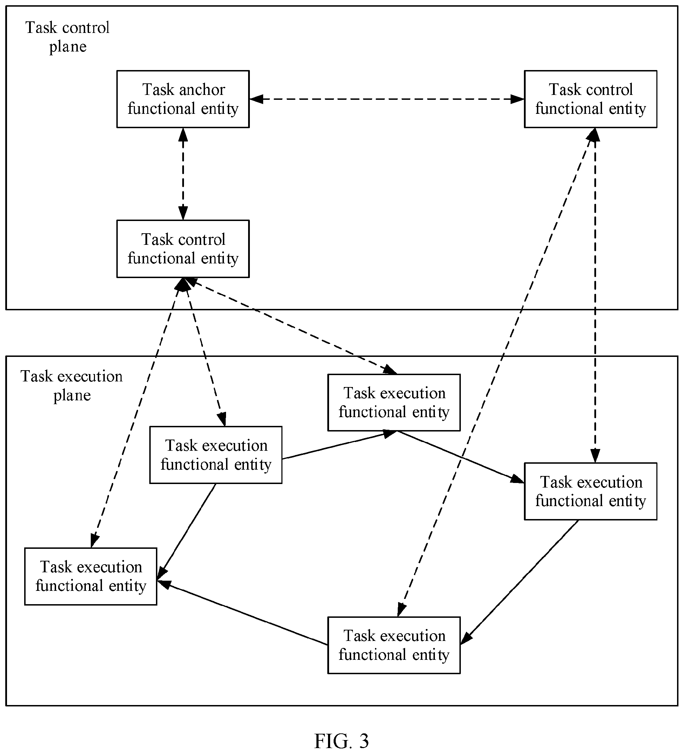

FIG. 3 is a diagram of a task management and control architecture according to an embodiment of this application. As shown in FIG. 3, the task management and control architecture may include at least one task anchor (task anchor, TA) functional entity (only one is shown in FIG. 3), at least one task control (task schedule, TS) functional entity, and at least one task execution (task execute, TE) functional entity. The task management and control architecture may separate control from execution. For example, a task control plane includes the TA functional entity and the TS functional entity, and a task execution plane includes the TE functional entity. It should be understood that one TA functional entity may communicate with at least one TS functional entity, and one TS functional entity may communicate with at least one TE functional entity. Certainly, the TA functional entity may further communicate with the at least one TE functional entity. For example, the TA functional entity may communicate with the at least one TE functional entity by using the TS functional entity.

In this application, the TA functional entity is responsible for life cycle management of a task, for example, completing task deployment, startup, deletion, modification, monitoring, and the like based on a QoS parameter of the task, including adjusting and controlling four elements, namely, computing power, an algorithm, data, and a connection, to ensure QoS of the task. The computing power includes a computing power resource. The algorithm is an algorithm for implementing AI model training. The data is data required for executing the task, for example, input data of the task. The connection is a relationship of connection between devices. The QoS parameter of the task may include at least one of the following: convergence time, precision, energy consumption, and a resource required by the task. The convergence time may be, for example, convergence time of the artificial intelligence (artificial intelligence, AI) model. The precision may be, for example, precision of the AI model, and the resource required by the task may include, for example, at least one of the following: the computing power resource, and a time-frequency resource. The computing power resource may include, for example, at least one of the following: memory required by the task, a quantity of central processing units (central processing units, CPUs) required by the task, and a quantity of graphics processing units (graphics processing units, GPUs). The time-frequency resource includes: a time domain resource and a frequency domain resource. The time domain resource may be, for example, a resource block (resource block, RB), or a resource element group (resource-element group, REG). The frequency domain resource may be, for example, a component carrier (component carrier, CC), or a bandwidth part (bandwidth part, BWP). The computing power resource included in the QoS parameter of the task may be, for example, an average computing power resource required by the task.

Further, the TA functional entity may receive a task and a QoS parameter from an interior of a network, or may receive a service request from a third-party entity by using a network capability exposure (network capability exposure, NCE) technology. The service request includes a service requirement requested by the third-party entity. The service requirement may include a workflow and a QoS parameter. The workflow includes a task flow of at least one task, and an execution result of one task in the workflow may be an input of another task. For example, the workflow includes a task 1, a task 2, and a task 3. After the task 1 is executed, an execution result of the task 1 needs to be used as an input of the task 2. After the task 2 is executed, an execution result of the task 2 needs to be used as an input of the task 3. The third-party entity may be, for example, an internet service provider (internet service provider, ISP) and an internet content provider (internet content provider, ICP). It may be understood that the TA functional entity has a service orchestration, management, and control function, that is, the TA functional entity may establish a task instance for the task from the interior of the network or a task in a workflow, allocate identification information of the task, and set a QoS parameter of the task.

Further, the TA functional entity may deploy the task instance to a specific node for execution, including performing proper allocation based on the QoS parameter of the task and a computing power status of each node, establishing the TE functional entity on the node, and delivering configuration information of the task. After the task is successfully deployed, the task is started, a task execution process is monitored and adjusted in real time, and after the task ends, context information of the task is deleted.

In a possible implementation, the configuration information of the task includes configuration information used to execute the task, and configuration information used to establish context information of the task. The context information of the task includes at least one of the following: the configuration information used to establish the context information of the task, the identification information of the task, identification information of a TE functional entity in the second node, and address information of the TE functional entity in the second node.

The configuration information used to execute the task includes at least one of the following: identification information of the input data of the task, identification information of output data of the task, and model identification information corresponding to the task.

The configuration information used to establish the context information of the task includes at least one of the following: a relationship of service collaboration between the task and another task, and a parameter of collaboration between the task and the another task. The relationship of service collaboration between the task and the another task includes at least one of the following: another task identifier pointed to by an input of the task, and another task identifier pointed to by an output of the task. The parameter of collaboration between the task and the another task may include a model segmentation point parameter between the task and the another task, and the like. It should be understood that the task and the another task may be subtasks of a same task. In any two tasks that have the service collaboration relationship, execution of one task needs to wait for an execution result of the other task. A model segmentation point is, for example, a location for segmenting a network layer in a model. For example, the AI model is a neural network model, and a segmentation point of the neural network model may be a location for segmenting a neural network layer in the neural network model.

In this application, the TS functional entity may establish and maintain the context information of the task, to control the task. The TS functional entity mainly has three core features.

First, the TS functional entity is responsible for real-time control of task execution, and implements deep convergence of communication and computing. A network environment changes dynamically. For example, communication connection may be switched, disposed remotely or closely, or the like. The TS can detect the network environment change, adjust a configuration like computing power and an algorithm in real time, and optimize the computing power, connection, data, and the algorithm in a coordinated manner, to ensure smooth task execution and a QoS requirement. The network environment change includes: The second node enters the idle state; or the second node performs cell handover; or a task executed by the second node is interrupted.

Second, the TS functional entity is responsible for task scheduling, including single task scheduling and multi-task scheduling. The single task scheduling means that a task is a process, requirements for a time-frequency resource and a computing power resource constantly change in the process, and real-time scheduling is required. The multi-task scheduling means that the TS functional entity may be deployed in the access network device or the core network device, a plurality of computing power resources are distributed in the TS functional entity, and more than one task may be deployed. When these tasks are on the time-frequency resource and the computing power resource, the TS functional entity needs to schedule the tasks based on QoS parameters of the tasks.

Third, the TS functional entity needs to be managed and controlled by the TA functional entity. The TS functional entity cannot exist independently as a function outside the task management and control architecture, and needs to be managed and controlled by the TA functional entity.

In this application, the TE functional entity is responsible for executing the task and performing data interaction in service logic. The TE functional entity is established by the TA functional entity. The TA functional entity may determine task allocation based on computing power of each network element. Once an execution network element is determined, the TA functional entity delivers an instruction to establish the TE functional entity for the task on the network element.

The workflow includes task flows of a plurality of tasks, and the plurality of tasks may be deployed on a plurality of TE functional entities for execution. Therefore, data interaction occurs between the TE functional entities. Interaction between the TE functional entities belongs to the task execution plane, is the service logic, and does not require intervention of the TA functional entity and the TS functional entity. To be specific, when a specific TE functional entity 1 needs to transfer data to another TE functional entity 2, the TE functional entity 1 may initiate the transfer. The TA functional entity and the TS functional entity do not need to deliver instructions from the task control plane to trigger the transfer.

In a possible implementation, the TA functional entity, the TS functional entity, and the TE functional entity may be independent devices. The TA functional entity may communicate with an access and mobility management function (access and mobility management function, AMF) network element. The AMF network element is mainly responsible for services such as mobility management and access management. In still another possible implementation, the TA functional entity, the TS functional entity, and the TE functional entity may be separately deployed in corresponding nodes. To be specific, the TA functional entity may be deployed in the third node, for example, the SMF; the TS functional entity may be deployed in the second node; and the TE functional entity may be deployed in the first node. This is not limited herein. It should be understood that when the second node is the core network device, the TS functional entity deployed on the second node may manage a computing power resource of the core network device and a computing power resource of the MEC entity. When the second node is the access network device, the TS functional entity deployed on the second node may manage a computing power resource of the first node and a computing power resource of the second node. When the access network device is a device that separates a CU from a DU, a control function of the TS functional entity may be deployed on the CU, and a scheduling function of the TS functional entity may be deployed on the DU. In other words, TS-control may be deployed on the CU, and TS-schedule may be deployed on the DU. In another possible implementation, the TS functional entity and the TE functional entity may be deployed on a same node. For example, the TS functional entity and the TE functional entity may be deployed on the second node.

The foregoing content briefly describes meanings of nouns (communication terms) in embodiments of this application to better understand the technical solutions provided in embodiments of this application, and does not constitute a limitation on the technical solutions provided in embodiments of this application.

The following describes embodiments of this application by using an example in which the first node is a terminal device, the second node is an access network device, the third node is a core network device, and the fourth node is an access network device. For ease of differentiation, the second node may be referred to as a first access network device, and the fourth node may be referred to as a second access network device. In other words, the second access network device is a device accessed after the first node performs cell handover.

In a possible implementation, at least one task execution functional entity may be deployed on the first node, a task control functional entity may be deployed on each of the second node and the fourth node, and a task anchor functional entity may be deployed on the third node. In addition, at least one task execution functional entity may be further deployed on each of the second node and the fourth node, that is, each of the second node and the fourth node may be further configured to execute a task.

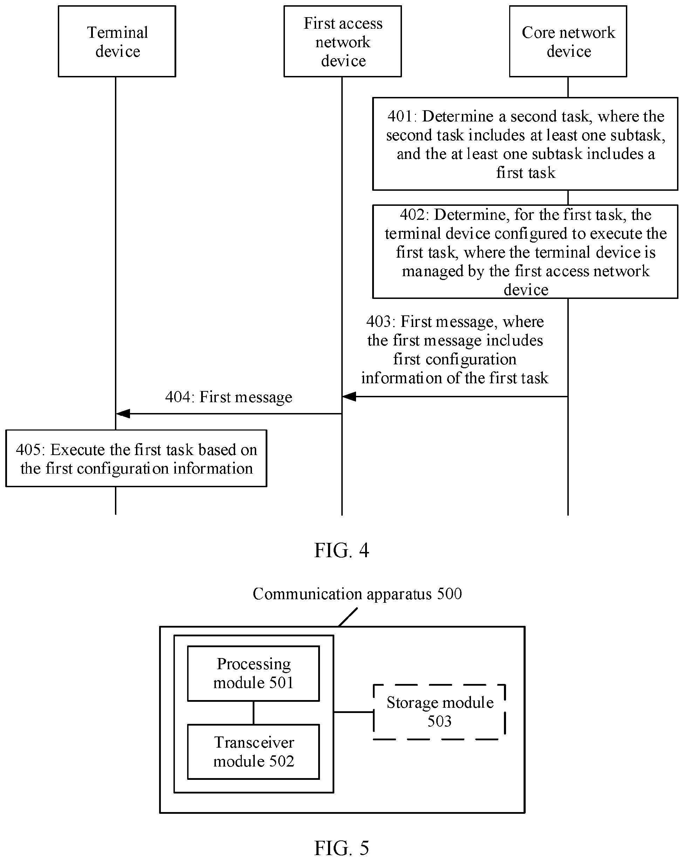

FIG. 4 is a schematic flowchart of a task execution method according to an embodiment of this application. As shown in FIG. 4, the method includes but is not limited to the following steps.

401: A core network device determines a second task, where the second task includes at least one subtask, and the at least one subtask includes a first task.

In a possible implementation, the second task may include an Al training task, an AI inference task, and an AI perception task, and a subtask may be an AI training task, an AI inference task, or an AI perception task. In another possible implementation, the second task may be an AI training task, an AI inference task, or an AI perception task, and a subtask may be, for example, a subtask of the foregoing tasks. This is not limited herein.

There may be one or more first tasks. This is not limited herein. In addition, in a possible implementation, one task corresponds to one task execution functional entity, but one TE functional entity may be configured to execute one or more tasks. In other words, after completing execution of one task, one TE functional entity may further execute another task.

Optionally, step 401 may include: The core network device receives the second task, or the core network device receives a service request from a third-party entity, where the service request includes a service requirement requested by the third-party entity, the service requirement may include a workflow, the workflow includes a task flow of at least one task, and the second task is the at least one task in the workflow. When the second task is a plurality of tasks in the workflow, one subtask in the second task may be one task in the workflow. That the core network device receives a second task may be understood as: The core network device receives the second task from an interior of a network, for example, receives the second task from a first access network device or a terminal device. This is not limited herein. It can be learned that the core network device may receive the second task from the interior of the network, or may receive the second task from the third-party entity. Therefore, the core network device may provide a corresponding service for a device inside the network or the third-party entity, that is, complete the task.

In a possible implementation, the core network device may further receive a QoS parameter of the second task from the interior of the network. The QoS parameter of the second task may include at least one of the following: convergence time, precision, energy consumption, and a resource required by the second task. The resource required by the second task may include at least one of the following: a computing power resource, and a time-frequency resource.

In addition, the service requirement may further include the QoS parameter of the second task. The core network device may set a QoS parameter for each subtask based on the QoS parameter of the second task.

402: The core network device determines, for the first task, the terminal device configured to execute the first task, where the terminal device is managed by the first access network device.

Optionally, before step 402, this solution may further include: The core network device receives at least one of the following from the first access network device: distribution information of the computing power resource in the network, and network topology information. Correspondingly, the first access network device sends at least one of the following to the core network device: the distribution information of the computing power resource in the network and the network topology information. The distribution information of the computing power resource in the network may include at least one of the following: a computing power resource of the first access network device, and a computing power resource of at least one terminal device managed by the first access network device. The network topology information may include a relationship of connection between the first access network device and the at least one terminal device managed by the first access network device. It may be understood that the distribution information of the computing power resource in the network and/or the network topology information may be periodically reported by the first access network device to the core network device, or may be queried by the core network device from the first access network device. This is not limited herein. It can be learned that the core network device may further receive, from the first access network device, at least one of the following: the distribution information of the computing power resource in the network and the network topology information, so that the core network device determines the device configured to execute the task, and learns of a device that manages the device.

After the core network device receives, from the first access network device, the at least one of the following: the distribution information of the computing power resource in the network and the network topology information, the core network device may determine, for the first task based on the at least one of the following: the distribution information of the computing power resource in the network and the network topology information, the terminal device configured to execute the first task, or may learn that the terminal device is managed by the first access network device. For example, in a possible implementation, step 402 may include: The core network device determines, for the first task based on the distribution information of the computing power resource in the network, the terminal device configured to execute the first task, where a computing power resource of the terminal device configured to execute the first task meets a computing power resource that is required by the first task and that is included in a QoS parameter of the first task. It can be learned that the core network device determines, for the first task based on the distribution information of the computing power resource in the network, the terminal device configured to execute the first task, that is, selects the terminal device that meets the computing power resource required by the first task, to execute the first task, so that the first task can be normally executed.

Optionally, the core network device may learn of a terminal device that participates in the task, for example, a terminal device that is specified by the interior of the network or the third-party entity to participate in the second task. In other words, before step 402, this solution may further include: The core network device receives indication information from the interior of the network, or the service requirement further includes indication information. The indication information indicates the terminal device that participates in the second task, and there may be one or more terminal devices that participate in the second task. In this case, the core network device may determine, for the first task based on the indication information and the at least one of the following: the distribution information of the computing power resource in the network and the network topology information, the terminal device configured to execute the first task, or may learn that the terminal device is managed by the first access network device.

For example, in another possible implementation, step 402 may include: The core network device determines, for the first task based on the distribution information of the computing power resource in the network and from the one or more terminal devices that are indicated by the indication information to participate in the second task, the terminal device configured to execute the first task, where a computing power resource of the terminal device configured to execute the first task meets a computing power resource that is required by the first task and that is included in a QoS parameter of the first task. It can be learned that the core network device determines, based on the distribution information of the computing power resources in the network and from the one or more terminal devices that are indicated by the indication information to participate in the second task, the terminal device configured to execute the first task for the first task, that is, selects, from the one or more terminal devices that are indicated by the indication information to participate in the second task, the terminal device that meets the computing power resource required by the first task, to execute the first task, so that the first task can be normally executed.

The terminal device indicated by the indication information to participate in the second task may include data required by the second task.

403: The first access network device receives a first message from the core network device, where the first message includes first configuration information of the first task.

Correspondingly, the core network device sends the first message to the first access network device.

The first message may further include identification information of the first task.

The first configuration information includes at least one of the following: identification information of input data of the first task, identification information of output data of the first task, and model identification information corresponding to the first task. It can be learned that the input and output of the first task and a used model are configured by using the first configuration information, to provide the complete task execution environment for the first task, so that the first task can be executed on the first node as required.

Optionally, this solution may further include: The first access network device receives a fourth message from the core network device, where the fourth message indicates to establish a task execution functional entity for the first task on a terminal device that is managed by the first access network device; the first access network device sends a second message to the terminal device, where the second message indicates the terminal device to establish the task execution functional entity for the first task; the first access network device receives attribute information of the task execution functional entity from the terminal device; and the first access network device sends the attribute information of the task execution functional entity to the core network device. It can be learned that the core network device may learn of the attribute information of the task execution functional entity from the first access network device, so that the core network device delivers configuration information based on the attribute information of the task execution functional entity. Further, the task can be normally executed.

In a possible implementation, the first access network device receives the fourth message from the core network device before step 403. The fourth message and the second message may further include the identification information of the first task.

In a possible implementation, after the core network device receives the attribute information of the task execution functional entity from the first access network device, step 403 may include: The core network device sends the first message to the first access network device based on the attribute information of the task execution functional entity. The attribute information of the task execution functional entity includes at least one of the following: identification information of the task execution functional entity, and address information of the task execution functional entity.

In addition, when sending the attribute information of the task execution functional entity to the core network device, the first access network device may further send the identification information of the first task to the core network device.

404: The terminal device receives the first message from the first access network device.

Correspondingly, the first access network device sends the first message to the terminal device.

405: The terminal device executes the first task based on the first configuration information.

It can be learned that, in the foregoing technical solution, the first access network device may send the first message from the core network device to the terminal device, where the first message includes the first configuration information of the first task, so that the terminal device can execute the first task based on the first configuration information. In this case, a complete task execution environment is provided for the first task in a wireless network by using the first configuration information, so that the first task can be executed as required.

In this application, in a process in which the terminal device executes different tasks, computing power resources required by the different tasks may change in real time, and the computing power resources of the terminal device are limited. Therefore, an available resource needs to be scheduled for a specific task in real time, so that the task can be smoothly executed. Specifically, this solution may further include: The terminal device sends a resource request message to the first access network device, where the resource request message includes a computing power resource required by the first task, and the resource request message is used to request the first access network device to allocate a computing power resource to the first task. Correspondingly, the first access network device may receive the resource request message from the terminal device, so that the first access network device determines, based on a priority of the first task and the computing power resource required by the first task, the computing power resource that is available for the first task, and sends a resource scheduling indication message to the terminal device. Correspondingly, the terminal device may receive the resource scheduling indication message from the first access network device, where the resource scheduling indication message indicates the computing power resource that is available for the first task. After the terminal device receives the resource scheduling indication message, step 405 may include: The terminal device executes the first task based on the first configuration information and the computing power resource that is available for the first task. It can be learned that, the first node sends the resource request message and receives the resource scheduling indication message, so that the first node may flexibly adjust, based on a task requirement of the first node, a resource required for running the task. This improves task execution efficiency and ensures smooth execution of the task.

The computing power resource that is required by the first task and that is included in the resource request message is different from the computing power resource that is required by the first task and that is included in the QoS parameter of the first task.

For example, at a moment 1, the computing power resource required by the first task is the computing power resource that is required by the first task and that is included in the QoS parameter of the first task. At a moment 2, the computing power resource required by the first task is less than or greater than the computing power resource that is required by the first task and that is included in the QoS parameter of the first task. In this case, the terminal device may send the resource request message to the first access network device.

The priority of the first task is determined based on the QoS parameter of the first task. For example, a QoS parameter of a task 1 includes convergence time 1, a QoS parameter of a task 2 includes convergence time 2, and the convergence time 1 is earlier than the convergence time 2. In this case, a priority of the task 1 may be higher than a priority of the task 2. The QoS parameter of the first task may include at least one of the following: convergence time, precision, energy consumption, and a resource required by the first task. The resource required by the first task may include at least one of the following: a computing power resource, and a time-frequency resource. For example, the computing power resource included in the QoS parameter of the first task is an average computing power resource required by the first task.

In this application, to help the first access network device manage the first task, for example, reallocate a computing power resource to the first task, the first access network device may further receive second configuration information of the first task from the core network device, to establish context information of the first task that includes the second configuration information. Specifically, this solution may further include: The first access network device receives a third message from the core network device, where the third message includes the second configuration information of the first task; and the first access network device establishes the context information of the first task, where the context information of the first task includes the second configuration information. It can be learned that after receiving the second configuration information from the core network device, the first access network device may establish the context information of the first task, so that the first access network device can manage the first task based on the context information of the first task.

The third message may further include identification information of the first task. In a possible implementation, the first message and the third message may be a same message or different messages. When the first message and the third message are the same message, the first message and the third message may be simultaneously sent, or may be separately sent. This is not limited herein. In other words, the core network device may simultaneously send the first message and the third message to the first access network device, or may respectively send the first message and the third message to the first access network device in two transmissions.

The second configuration information includes at least one of the following: a relationship of service collaboration between the first task and another subtask included in the second task, and a parameter of collaboration between the first task and the another subtask included in the second task. The relationship of service collaboration between the first task and the another subtask included in the second task includes at least one of the following: a first subtask identifier pointed to by an input of the first task, and a second subtask identifier pointed to by an output of the first task. A first subtask and a second subtask are different tasks in the another subtask. The parameter of collaboration between the first task and the another subtask included in the second task may include a model segmentation point parameter between the first task and the another subtask, and the like. It should be understood that, in any two subtasks that have a service collaboration relationship, execution of one subtask needs to wait for an execution result of the other subtask. For example, the first subtask identifier pointed to by the input to the first task may be understood as: Execution of the first task needs to wait for an execution result of the first subtask. The second subtask identifier pointed to by the output of the first task may be understood as: Execution of the second subtask needs to wait for an execution result of the first task.

In addition, the second configuration information may further include the QoS parameter of the first task.

The context information of the first task may further include at least one of the following: the identification information of the first task, the identification information of the task execution functional entity in the first node, and the address information of the task execution functional entity in the first node.

In a possible implementation, after the first access network device establishes the context information of the first task, the terminal device may perform cell handover. In this case, the first access network device may send the context information of the first task to a second access network device, so that the second access network device can manage the first task based on the context information of the first task.

Optionally, after execution of the first task is completed, the context information of the first task and the task execution functional entity may be deleted. Specifically, the terminal device sends a task end message to the core network device by using the first access network device, where the task end message includes the identification information of the first task. Correspondingly, the core network device receives the task end message from the terminal device by using the first access network device. Further, the core network device may send a first deletion message to the first access network device, where the first deletion message indicates the first access network device to delete the context information of the first task. After receiving the first deletion message, the first access network device may send a second deletion message to the terminal device, where the second deletion message indicates the terminal device to delete the task execution functional entity used to execute the first task.

In addition, after execution of the second task is completed, an execution result of the second task may be fed back. The execution result of the second task may be fed back in two manners. One is feeding back the execution result of the second task to the interior of the network or the third-party entity, and the other is feeding back an address for obtaining the execution result of the second task to the interior of the network.

For example, the terminal device may obtain the execution result of the second task. When the core network device receives the second task from the interior of the network, the terminal device may feed back the execution result of the second task or the address for obtaining the execution result of the second task to the interior of the network. When the core network device receives the service request of the third-party entity, the terminal device may feed back the execution result of the second task to the third-party entity.

The feedback manner of the execution result of the second task may be included in configuration information of the task, for example, the first configuration information, or included in a message that is delivered by the core network device after the core network device receives a feedback manner obtaining request. This is not limited herein. Certainly, a feedback address of the execution result of the second task may alternatively be included in the configuration information of the task, for example, the first configuration information, or included in the message delivered by the core network device after the core network device receives the feedback manner obtaining request. This is not limited herein.

For example, the first configuration information further includes the feedback manner and the feedback address of the execution result of the second task. After the terminal device obtains the execution result of the second task, the terminal device may feed back the execution result of the second task based on the feedback manner and the feedback address of the execution result of the second task.

For another example, after the terminal device obtains the execution result of the second task, the terminal device may send a feedback manner obtaining request to the core network device by using the first access network device. The feedback manner obtaining request is used to request a feedback manner and a feedback address of the execution result of the second task. After receiving the feedback manner obtaining request, the core network device may deliver the feedback manner and the feedback address of the execution result of the second task. After the terminal device receives the feedback manner and the feedback address of the execution result of the second task, the terminal device may feed back the execution result of the second task based on the feedback manner and the feedback address of the execution result of the second task.

The foregoing mainly describes the solutions provided in this application from the perspective of interaction between devices. It may be understood that, to implement the foregoing functions, each device includes a corresponding hardware structure and/or software module for performing each function. A person skilled in the art should easily be aware that, in combination with units and algorithm steps of the examples described in embodiments disclosed in this specification, this application may be implemented by hardware or a combination of hardware and computer software. Whether a specific function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the access network device, the core network device, or the terminal device may be divided into functional modules based on the foregoing method examples. For example, each functional module may be obtained through division based on a corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

If the integrated module is used, refer to FIG. 5. FIG. 5 is a diagram of a structure of a communication apparatus according to an embodiment of this application. The communication apparatus 500 may be applied to the method shown in FIG. 4. As shown in FIG. 5, the communication apparatus 500 includes a processing module 501 and a transceiver module 502. The processing module 501 may be one or more processors, and the transceiver module 502 may be a transceiver or a communication interface. The communication apparatus may be configured to implement the access network device, the core network device, or the terminal device in any one of the foregoing method embodiments, or may be configured to implement a function of the network element in any one of the foregoing method embodiments. The network element or network function may be a network element in a hardware device, a software function running on dedicated hardware, or a virtualization function instantiated on a platform (for example, a cloud platform). Optionally, the communication apparatus 500 may further include a storage module 503, configured to store program code and data that are of the communication apparatus 500.

In an instance, when the communication apparatus is used as the terminal device or a chip used in the terminal device, the communication apparatus performs the steps performed by the terminal device in the foregoing method embodiments. The transceiver module 502 is configured to support communication with the access network device and the like. The transceiver module specifically performs a sending and/or receiving action performed by the terminal device in FIG. 4, for example, supports the terminal device in performing step 404, and/or performing another process of the technology described in this specification. The processing module 501 may be configured to support the communication apparatus 500 in performing a processing action in the foregoing method embodiments, for example, may be configured to support the terminal device in performing step 405, and/or performing another process of the technology described in this specification.

For example, the terminal device includes a transceiver module 502 and a processing module 501. The transceiver module 502 is configured to receive a first message from a first access network device, where the first message includes first configuration information of a first task. The processing module 501 is configured to execute the first task based on the first configuration information.

In an instance, when the communication apparatus is used as the access network device or a chip used in the access network device, the communication apparatus performs the steps performed by the access network device in the foregoing method embodiments. The transceiver module 502 is configured to support communication with the core network device, the terminal device, and the like. The transceiver module specifically performs a sending and/or receiving action performed by the access network device in FIG. 4, for example, supports the access network device in performing step 403, and/or performing another process of the technology described in this specification. The processing module 501 may be configured to support the communication apparatus 500 in performing a processing action in the foregoing method embodiments, for example, may be configured to support the access network device in performing another process of the technology described in this specification.

For example, the first access network device includes a transceiver module 502. The transceiver module 502 is configured to receive a first message from the core network device, where the first message includes first configuration information of a first task. The transceiver module 502 is configured to send the first message to the terminal device.

In an instance, when the communication apparatus is used as the core network device or a chip used in the core network device, the communication apparatus performs the steps performed by the core network device in the foregoing method embodiments. The transceiver module 502 is configured to support communication with the access network device and the like. The transceiver module specifically performs a sending and/or receiving action performed by the core network device in FIG. 4, for example, supports the core network device in performing another process of the technology described in this specification. The processing module 501 may be configured to support the communication apparatus 500 in performing a processing action in the foregoing method embodiments, for example, may be configured to support the core network device in performing step 401 and step 402, and/or performing another process of the technology described in this specification.

For example, the core network device includes a processing module 501 and a transceiver module 502. The processing module 501 is configured to determine a second task, where the second task includes at least one subtask, and the at least one subtask includes a first task. The processing module 501 is configured to determine, for the first task, a terminal device configured to execute the first task, where the terminal device is managed by the first access network device. The transceiver module 502 is configured to send a first message to a first access network device, where the first message includes first configuration information of a first task.

In a possible implementation, when the core network device, the access network device, or the terminal device is a chip, the transceiver module 502 may be an input/output interface, a pin, a circuit, or the like. For example, the input/output interface may be configured to input to-be-processed data to a logic circuit, and may output a processing result of the logic circuit to the outside. During specific implementation, the input/output interface may be a general purpose input output (general purpose input output, GPIO) interface, and may be connected to a plurality of peripheral devices (for example, a display (LCD), a camera (camera), a radio frequency (radio frequency, RF) module, and an antenna). The input/output interface is connected to the processor by using a bus.

The processing module 501 may be a logic circuit, and the logic circuit may execute stored instructions, so that the chip performs the method according to the embodiment shown in FIG. 4. It may be understood that the instructions may be stored in the storage module.

The storage module may be a storage module inside the chip, for example, a register or a cache. Alternatively, the storage module may be a storage module located outside the chip, for example, a read-only memory (Read-Only Memory, ROM), another type of static storage device that can store static information and instructions, or a random access memory (Random Access Memory, RAM).

It should be noted that a function corresponding to each of the logic circuit and the input/output interface may be implemented by using a hardware design, may be implemented by using a software design, or may be implemented by a combination of software and hardware. This is not limited herein.

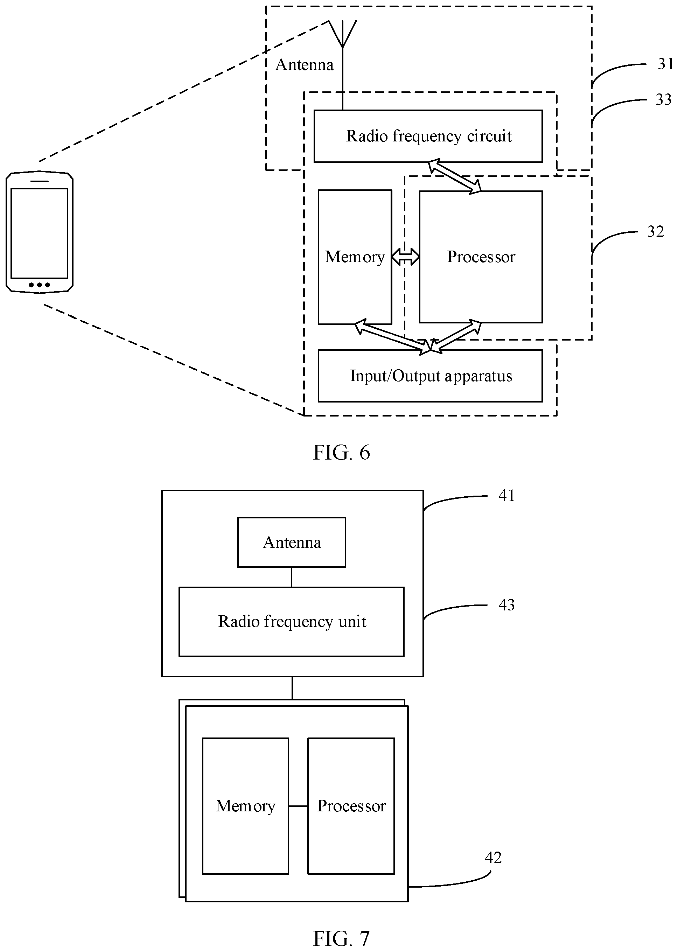

FIG. 6 is a simplified diagram of a structure of a terminal device according to an embodiment of this application. For ease of understanding and illustration, in FIG. 6, a mobile phone is used as an example of the terminal device. As shown in FIG. 6, the terminal device includes at least one processor, and may further include a radio frequency circuit, an antenna, and an input/output apparatus. The processor may be configured to process a communication protocol and communication data, and may be further configured to control the terminal device, execute a software program, process data of the software program, and the like. The terminal device may further include a memory. The memory is mainly configured to store a software program and data. These related programs may be loaded into the memory when the communication apparatus is delivered from a factory, or may be loaded into the memory when needed later. The radio frequency circuit is mainly configured to perform conversion between a baseband signal and a radio frequency signal, and process the radio frequency signal. The antenna is mainly configured to receive and send a radio frequency signal in an electromagnetic wave form, and the antenna is the antenna provided in embodiments of this application. The input/output apparatus, like a touchscreen, a display, or a keyboard, is mainly configured to: receive data input by a user and output data to the user. It should be noted that terminal devices of some types may have no input/output apparatus.

When data needs to be sent, the processor performs baseband processing on the to-be-sent data, and then outputs a baseband signal to the radio frequency circuit. The radio frequency circuit performs radio frequency processing on the baseband signal, and then sends a radio frequency signal in a form of an electromagnetic wave by using the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, only one memory and one processor are shown in FIG. 6. In an actual terminal device product, there may be one or more processors and one or more memories. The memory may also be referred to as a storage medium, a storage device, or the like. The memory may be deployed independent of the processor, or may be integrated with the processor. This is not limited in embodiments of this application.

In this embodiment of this application, an antenna having sending and receiving functions and the radio frequency circuit may be considered as a receiving unit and a sending unit (which may also be collectively referred to as a transceiver unit) of the terminal device, and a processor having a processing function may be considered as a processing unit of the terminal device. As shown in FIG. 6, the terminal device includes a receiving module 31, a processing module 32, and a sending module 33. The receiving module 31 may also be referred to as a receiver, a receiving machine, a receiver circuit, or the like. The sending module 33 may also be referred to as a sender, a transmitter, a transmitting machine, a transmitter circuit, or the like. The processing module 32 may also be referred to as a processor, a processing board, a processing apparatus, or the like.

For example, the processing module 32 is configured to perform a function of a terminal device in the embodiment shown in FIG. 4.

FIG. 7 is a simplified diagram of a structure of an access network device according to an embodiment of this application. The access network device includes a baseband part 42 and a part for radio frequency signal transmission/reception and conversion. The part for radio frequency signal transmission/reception and conversion further includes a receiving module 41 part and a sending module 43 part (which may also be collectively referred to as a transceiver module). The part for radio frequency signal transmission/reception and conversion is mainly configured to: send/receive a radio frequency signal and perform conversion between the radio frequency signal and a baseband signal. The baseband part 42 is mainly configured to perform baseband processing, control the access network device, and the like. The receiving module 41 may also be referred to as a receiver, a receiving machine, a receiver circuit, or the like. The sending module 43 may also be referred to as a sender, a transmitter, a transmitting machine, a transmitter circuit, or the like. The baseband part 42 is usually a control center of the access network device, and may also be referred to as a processing module, and is configured to perform the steps performed by the first access network device, the second access network device, or the third access network device in FIG. 4. For details, refer to the foregoing descriptions of the related parts.

The baseband part 42 may include one or more boards. Each board may include one or more processors and one or more memories. The processor is configured to read and execute a program in the memory to implement a baseband processing function and control the access network device. If there are a plurality of boards, the boards may be interconnected to improve a processing capability. In an optional implementation, the plurality of boards may share one or more processors, the plurality of boards may share one or more memories, or the plurality of boards may share one or more processors at the same time.

For example, for the first access network device, the sending module 43 is configured to perform a function of the first access network device in the embodiment shown in FIG. 4.

An embodiment of this application further provides a communication apparatus, including a processor, a memory, an input interface, and an output interface. The input interface is configured to receive information from another communication apparatus other than the communication apparatus. The output interface is configured to output information to the another communication apparatus other than the communication apparatus. When invoking and executing a computer program stored in the memory, the processor is configured to perform the embodiment shown in FIG. 4. Optionally, the memory and the processor are integrated together.

An embodiment of this application further provides a communication apparatus, including a processor and a transceiver. The processor is configured to support the communication apparatus in performing the embodiment shown in FIG. 4. The transceiver is configured to support communication between the communication apparatus and another communication apparatus other than the communication apparatus. The communication apparatus may further include a memory. The memory is configured to be coupled to the processor, and the memory stores program instructions and data that are necessary for the communication apparatus. The transceiver may be integrated into the communication apparatus or independent of the communication apparatus. This is not limited herein. For example, in a distributed scenario, the transceiver may be disposed remotely independent of the communication apparatus.

An embodiment of this application further provides a chip. The chip includes at least one logic circuit and an input/output interface. The logic circuit is configured to read and execute stored instructions. When the instructions are run, the chip is enabled to perform the embodiment shown in FIG. 4. Optionally, the baseband part 42 may be the chip.

An embodiment of this application further provides a computer-readable storage medium. The computer-readable storage medium stores a computer program, the computer program includes program instructions, and when the program instructions are executed by a computer, the computer is enabled to perform the embodiment shown in FIG. 4.

An embodiment of this application further provides a computer program product. When a computer reads and executes the computer program product, the computer is enabled to perform the embodiment shown in FIG. 4.

The foregoing units described as separate parts may or may not be physically separate, and parts displayed as units may or may not be physical units, may be located in one position, or may be distributed on a plurality of network units. Some or all of the units may be selected based on an actual requirement, to achieve the objectives of the solutions in embodiments of this application. In addition, the network element units in embodiments of this application may be integrated into one processing unit, or each of the units may exist alone physically, or two or more units are integrated into one unit. The integrated unit may be implemented in a form of hardware, or may be implemented in a form of a software network element unit.

When the integrated unit is implemented in the form of a software network element unit and sold or used as an independent product, the integrated unit may be stored in a computer-readable storage medium. Based on such an understanding, an essentially contributing part in the technical solutions of this application, or all or some of the technical solutions may be embodied in a form of a software product. The computer software product is stored in a storage medium, and includes several instructions for instructing a computer device (which may be a personal computer, a terminal device, a cloud server, a network device, or the like) to perform all or some of the steps of the method described in the foregoing embodiment of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc. The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A task execution method, wherein the method comprises:
receiving, by a first node, a first message from a second node, wherein the first message comprises first configuration information of a first task; and
executing, by the first node, the first task based on the first configuration information.

2. The method according to claim 1, wherein the first message further comprises identification information of the first task, and the first configuration information comprises at least one of the following: identification information of input data of the first task, identification information of output data of the first task, and model identification information corresponding to the first task.

3. The method according to claim 1 or 2, wherein before the receiving, by a first node, a first message from a second node, the method further comprises:
receiving, by the first node, a second message from the second node, wherein the second message indicates the first node to establish a task execution functional entity for the first task; and
sending, by the first node, attribute information of the task execution functional entity to the second node, wherein
the attribute information of the task execution functional entity comprises at least one of the following: identification information of the task execution functional entity, and address information of the task execution functional entity.

4. The method according to any one of claims 1 to 3, wherein the method further comprises:
sending, by the first node, a resource request message to the second node, wherein the resource request message comprises a computing power resource required by the first task, and the resource request message is used to request the second node to allocate a computing power resource to the first task; and
receiving, by the first node, a resource scheduling indication message from the second node, wherein the resource scheduling indication message indicates the computing power resource that is available for the first task; and
the executing, by the first node, the first task based on the first configuration information comprises:
executing, by the first node, the first task based on the first configuration information and the computing power resource that is available for the first task.

5. A task execution method, wherein the method comprises:
receiving, by a second node, a first message from a third node, wherein the first message comprises first configuration information of a first task; and
sending, by the second node, the first message to a first node.

6. The method according to claim 5, wherein the first message further comprises identification information of the first task, and the first configuration information comprises at least one of the following: identification information of input data of the first task, identification information of output data of the first task, and model identification information corresponding to the first task.

7. The method according to claim 5 or 6, wherein the method further comprises:
receiving, by the second node, a third message from the third node, wherein the third message comprises second configuration information of the first task; and
establishing, by the second node, context information of the first task, wherein the context information of the first task comprises the second configuration information.

8. The method according to claim 7, wherein the second configuration information comprises at least one of the following: a relationship of service collaboration between the first task and another subtask comprised in a second task, and a parameter of collaboration between the first task and the another subtask comprised in the second task; and
the second task comprises at least one subtask, and the at least one subtask comprises the first task.

9. The method according to any one of claims 5 to 8, wherein the method further comprises:
receiving, by the second node, a fourth message from the third node, wherein the fourth message indicates to establish a task execution functional entity for the first task on the first node that is managed by the second node;
sending, by the second node, a second message to the first node, wherein the second message indicates the first node to establish the task execution functional entity for the first task;
receiving, by the second node, attribute information of the task execution functional entity from the first node; and
sending, by the second node, the attribute information of the task execution functional entity to the third node, wherein
the attribute information of the task execution functional entity comprises at least one of the following: identification information of the task execution functional entity, and address information of the task execution functional entity.

10. The method according to any one of claims 5 to 9, wherein the method further comprises:
sending, by the second node, the context information of the first task to a fourth node, wherein the fourth node is a node accessed after the first node performs cell handover.

11. The method according to claim 7 or 10, wherein the context information of the first task further comprises at least one of the following: the identification information of the first task, the identification information of the task execution functional entity in the first node, and the address information of the task execution functional entity in the first node.

12. The method according to any one of claims 5 to 11, wherein the method further comprises:
receiving, by the second node, a resource request message from the first node, wherein the resource request message comprises a computing power resource required by the first task, and the resource request message is used to request the second node to allocate a computing power resource to the first task;
determining, by the second node based on a priority of the first task and the computing power resource required by the first task, the computing power resource that is available for the first task, wherein the priority of the first task is determined based on a QoS parameter of the first task; and
sending, by the second node, a resource scheduling indication message to the first node, wherein the resource scheduling indication message indicates the computing power resource that is available for the first task.

13. A task execution method, wherein the method comprises:
determining, by a third node, a second task, wherein the second task comprises at least one subtask, and the at least one subtask comprises a first task;
determining, by the third node for the first task, a first node configured to execute the first task, wherein the first node is managed by a second node; and
sending, by the third node, a first message to the second node, wherein the first message comprises first configuration information of the first task.

14. The method according to claim 13, wherein the first message further comprises identification information of the first task, and the first configuration information comprises at least one of the following: identification information of input data of the first task, identification information of output data of the first task, and model identification information corresponding to the first task.

15. The method according to claim 13 or 14, wherein the method further comprises:
sending, by the third node, a fourth message to the second node, wherein the fourth message indicates to establish a task execution functional entity for the first task on the first node that is managed by the second node; and
receiving, by the third node, attribute information of the task execution functional entity from the second node; and
the sending, by the third node, a first message to the second node comprises:
sending, by the third node, the first message to the second node based on the attribute information of the task execution functional entity, wherein
the attribute information of the task execution functional entity comprises at least one of the following:
identification information of the task execution functional entity, and address information of the task execution functional entity.

16. The method according to any one of claims 13 to 15, wherein the method further comprises:
sending, by the third node, a third message to the second node, wherein the third message comprises second configuration information of the first task.

17. The method according to claim 16, wherein the second configuration information comprises at least one of the following: a relationship of service collaboration between the first task and another subtask comprised in the second task, and a parameter of collaboration between the first task and the another subtask comprised in the second task.

18. The method according to claim 8 or 17, wherein the second configuration information further comprises a quality of service QoS parameter of the first task.

19. A communication apparatus, wherein the communication apparatus is a first node, and the first node comprises a transceiver module and a processing module;
the transceiver module is configured to receive a first message from a second node, wherein the first message comprises first configuration information of a first task; and
the processing module is configured to execute the first task based on the first configuration information.

20. The apparatus according to claim 19, wherein the first message further comprises identification information of the first task, and the first configuration information comprises at least one of the following: identification information of input data of the first task, identification information of output data of the first task, and model identification information corresponding to the first task.

21. The apparatus according to claim 19 or 20, wherein the transceiver module is further configured to:
receive a second message from the second node, wherein the second message indicates the first node to establish a task execution functional entity for the first task; and
send attribute information of the task execution functional entity to the second node, wherein
the attribute information of the task execution functional entity comprises at least one of the following: identification information of the task execution functional entity, and address information of the task execution functional entity.

22. The apparatus according to any one of claims 19 to 21, wherein the transceiver module is further configured to:
send a resource request message to the second node, wherein the resource request message comprises a computing power resource required by the first task, and the resource request message is used to request the second node to allocate a computing power resource to the first task; and
receive a resource scheduling indication message from the second node, wherein the resource scheduling indication message indicates the computing power resource that is available for the first task; and
when executing the first task based on the first configuration information, the processing module is configured to the first task based on the first configuration information and the computing power resource that is available for the first task.

23. A communication apparatus, wherein the communication apparatus is a second node, and the first node comprises a transceiver module, wherein
the transceiver module is configured to receive a first message from a third node, wherein the first message comprises first configuration information of a first task; and
the transceiver module is configured to send the first message to a first node.

24. The apparatus according to claim 23, wherein the first message further comprises identification information of the first task, and the first configuration information comprises at least one of the following: identification information of input data of the first task, identification information of output data of the first task, and model identification information corresponding to the first task.

25. The apparatus according to claim 23 or 24, wherein the communication apparatus further comprises a processing module;
the transceiver module is further configured to receive a third message from the third node, wherein the third message comprises second configuration information of the first task; and
the processing module is configured to establish context information of the first task, wherein the context information of the first task comprises the second configuration information.

26. The apparatus according to claim 25, wherein the second configuration information comprises at least one of the following: a relationship of service collaboration between the first task and another subtask comprised in a second task, and a parameter of collaboration between the first task and the another subtask comprised in the second task, and
the second task comprises at least one subtask, and the at least one subtask comprises the first task.

27. The apparatus according to any one of claims 23 to 26, wherein the transceiver module is further configured to:
receive a fourth message from the third node, wherein the fourth message indicates to establish a task execution functional entity for the first task on the first node that is managed by the second node;
send a second message to the first node, wherein the second message indicates the first node to establish the task execution functional entity for the first task;
receive attribute information of the task execution functional entity from the first node; and
send the attribute information of the task execution functional entity to the third node, wherein
the attribute information of the task execution functional entity comprises at least one of the following: identification information of the task execution functional entity, and address information of the task execution functional entity.

28. The apparatus according to any one of claims 23 to 27, wherein the transceiver module is further configured to send the context information of the first task to a fourth node, wherein the fourth node is a node accessed after the first node performs cell handover.

29. The apparatus according to claim 25 or 28, wherein the context information of the first task further comprises at least one of the following: the identification information of the first task, the identification information of the task execution functional entity in the first node, and the address information of the task execution functional entity in the first node.

30. The apparatus according to any one of claims 23 to 29, wherein the communication apparatus further comprises a processing module;
the transceiver module is further configured to receive a resource request message from the first node, wherein the resource request message comprises a computing power resource required by the first task, and the resource request message is used to request the second node to allocate a computing power resource to the first task;
the processing module is configured to determine, based on a priority of the first task and the computing power resource required by the first task, the computing power resource that is available for the first task, wherein the priority of the first task is determined based on a QoS parameter of the first task; and
the transceiver module is further configured to send a resource scheduling indication message to the first node, wherein the resource scheduling indication message indicates the computing power resource that is available for the first task.

31. A communication apparatus, wherein the communication apparatus is a third node, and the first node comprises a transceiver module and a processing module;
the processing module is configured to determine a second task, wherein the second task comprises at least one subtask, and the at least one subtask comprises a first task;
the processing module is configured to determine, for the first task, a first node configured to execute the first task, wherein the first node is managed by a second node; and
the transceiver module is configured to send a first message to the second node, wherein the first message comprises first configuration information of the first task.

32. The apparatus according to claim 31, wherein the first message further comprises identification information of the first task, and the first configuration information comprises at least one of the following: identification information of input data of the first task, identification information of output data of the first task, and model identification information corresponding to the first task.

33. The apparatus according to claim 31 or 32, wherein the transceiver module is further configured to:
send a fourth message to the second node, wherein the fourth message indicates to establish a task execution functional entity for the first task on the first node that is managed by the second node; and
receive attribute information of the task execution functional entity from the second node; and
when sending the first message to the second node, the transceiver module is configured to send the first message to the second node based on the attribute information of the task execution functional entity, wherein
the attribute information of the task execution functional entity comprises at least one of the following: identification information of the task execution functional entity, and address information of the task execution functional entity.

34. The apparatus according to any one of claims 31 to 33, wherein the transceiver module is further configured to send a third message to the second node, and the third message comprises second configuration information of the first task.

35. The apparatus according to claim 34, wherein the second configuration information comprises at least one of the following: a relationship of service collaboration between the first task and another subtask comprised in the second task, and a parameter of collaboration between the first task and the another subtask comprised in the second task.

36. The apparatus according to claim 26 or 35, wherein the second configuration information further comprises a quality of service QoS parameter of the first task.

37. A chip, wherein the chip comprises at least one logic circuit and an input/output interface, the logic circuit is configured to read and execute stored instructions, and when the instructions are run, the chip is enabled to perform the method according to any one of claims 1 to 18.

38. A computer-readable storage medium, wherein the computer-readable storage medium stores a computer program, the computer program comprises program instructions, and when the program instructions are executed by a computer, the computer is enabled to perform the method according to any one of claims 1 to 18.

39. A communication apparatus, comprising a processor, wherein when a computer program stored in a memory is invoked and executed, the processor is configured to perform the method according to any one of claims 1 to 18.

40. A communication system, comprising a first node configured to perform the method according to any one of claims 1 to 4, a second node configured to perform the method according to any one of claims 5 to 12, and a first node configured to perform the method according to any one of claims 13 to 18.
